(19) Europäisches Patentamt
European Patent Office
Office européen des brevets

(11) **EP 3 457 166 A1**

(12) **EUROPEAN PATENT APPLICATION**

(43) Date of publication:
**20.03.2019 Bulletin 2019/12**

(51) Int Cl.:
**G01S 7/41** (2006.01)   **G01S 13/34** (2006.01)
**G01S 13/88** (2006.01)

(21) Application number: **17190739.7**

(22) Date of filing: **13.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ABB Schweiz AG
5400 Baden (CH)**

(72) Inventors:
• **Lehment, Nicolas
81371 München (DE)**
• **Decker, Andreas
64293 Darmstadt (DE)**
• **Matthias, Björn
76669 Bad Schönborn (DE)**
• **Byner, Christoph
68167 Mannheim (DE)**
• **Roberts, Richard
82205 Gilching (DE)**
• **Bock-Krausen, Leopold
81375 München (DE)**

(54) **LIVE OBJECT DETECTION METHOD**

(57)    The present invention is about a method for distinguishing between animate and inanimate objects in a monitored area, comprising the steps of:
a) emitting (S1) a frequency-modulated wave into said area and receiving (S2) a reflected wave from said area;
b) identifying (S8), within the spectrum of the reflected wave, at least one object-related frequency range (k, ..., k+3) associated to a reflecting object;
c) extracting (S3) from said reflected wave a spectral component (k, ...) corresponding to at least a sub-range of said object-related frequency range ([k, ..., k+3]),
d) monitoring (S5, S7) the phase ($\phi_k$) of said spectral component (k); and
e) deciding (S8) that the object is animate if fluctuations ($\sigma(\delta\phi_k)$) of said phase ($\phi_k$) exceed a predetermined threshold.

Fig. 6

EP 3 457 166 A1

**Description**

The present invention relates to a method for distinguishing between animate and inanimate objects in a monitored area, in particular in the vicinity of a robot.

Wherever robots are used in industry, protecting staff from injury through the robots is a prime concern. Conventionally, enclosures have been built around the robots, equipped with alarms which cause an emergency stop of the robot whenever a person opens the enclosure. Such robots can only accomplish fully automatized, highly repetitive tasks that require no human intervention at all. A direct interaction between robot and human is not possible.

In order to enable robots and humans to co-operate without being separated by an enclosure, more sophisticated safety concepts are required. In particular, a robot controller has to be aware of the eventual presence of a human in the vicinity of the robot, in order to take account thereof when controlling the movements of the robot.

Radar-based techniques for detecting the presence of humans in a monitored area are widely used in military and catastrophe relief applications.

WO 2014/172668 A1 discloses a radar system for detecting human or animal life hidden under rubble, e.g. after an earthquake. This prior art radar system emits a stepped frequency continuous microwave, receives a reflected wave and processes the reflected wave into a plurality of range bins, each corresponding to a distance interval from the radar system transmitter/receiver to a reflecting object, and examines each to these range bins for the presence of repetitive patterns that might be indicative of life existing in the corresponding distance range.

A reliable judgment on the presence of a repetitive pattern requires an observation time which is several times longer than the pattern to be detected. The repetitive patterns the system of WO 2014/172668 A1 is designed to detect are heartbeat and respiration. Both have a duration in the range from one to several seconds, so that the time needed for a reliable detection cannot be shorter. This makes the radar system of WO 2014/172668 A1 unsuitable for the surveillance of the vicinity of a robot, since if a human enters the moving range of the robot, the fact must be detected within fractions of a second.

It is an object of the present invention to provide a method for distinguishing between animate and inanimate objects in a monitored area which is fast enough to provide adequate protection if applied to the vicinity of a robot.

The object is achieved by a method for distinguishing between animate and inanimate objects in a monitored area, comprising the steps of:

   a) emitting a frequency-modulated wave into said area and receiving a reflected wave from said area;
   b) identifying, within the spectrum of the reflected wave, at least one object-related frequency range associated to a reflecting object;
   c) extracting from said reflected wave a spectral component corresponding to at least a sub-range of said object-related frequency range,
   d) monitoring the phase of said spectral component; and
   e) deciding that the object is animate if fluctuations of said phase exceed a predetermined threshold.

Since the method relies on phase changes and not on repetitive patterns, it can respond to non-periodic changes of the reflected wave, and thus detect a person moving in the monitored area within less than a heartbeat's time, enabling a timely response of the robot controller.

Since the emitted wave is frequency modulated, the reflected wave will comprise various spectral components corresponding to different reflecting objects, the frequency of which is related to the travel time of the wave. If the frequency modulation is a linear ramp, the frequency difference between the currently emitted wave and a component of the reflected wave is directly proportional to the distance between the transmitter/receiver and the reflecting object.

For a continuous monitoring, the frequency should vary repetitively in a predetermined interval. Immediately after it has changed discontinuously, distance cannot be judged based on the above-mentioned frequency difference. The ramp period should therefore be much longer than the maximum travel time of the wave in the monitored area. The radius of the monitored area should not be much longer than the reaching range of the robot, i.e. a couple of meters, corresponding to a travel time of some 20 ns. If the period of the ramp is at least 20 $\mu$s, artefacts resulting from a discontinuous frequency change can be neglected.

Identification of an object-related frequency range can be done based on spectral intensity of the reflected wave. If in a given distance range there is no reflecting object, the frequency range of the reflected wave associated to that distance range will only contain noise. Therefore, the spectral intensity of the reflected wave may be compared to an intensity threshold, and in step b) a frequency range in which the spectral intensity of the reflected wave is above the intensity threshold can be identified as an object-related frequency range.

In order to define the object-related frequency range, it would be conceivable to transform the received wave into the frequency domain, determine its intensity as a function of frequency, and to regard as an object-related frequency range any frequency range in which the intensity exceeds a predetermined intensity threshold.

Since the transformation into the frequency domain requires considerable computing power, it should not be done with a higher resolution than necessary. Preferably, therefore, for better handling of a high increase of amount of data to be processed, the frequency range of the emitted wave is divided into a plurality of sub-ranges, and frequency resolution of the transformed reflected signal is limited to these sub-ranges. Based on this transformation, the intensity of a spectral component of the reflected wave corresponding to one of said sub-ranges can straightforwardly be compared to an intensity threshold. If the intensity threshold is exceeded, the sub-range can be regarded as the object-related frequency range mentioned above, or as part of it.

In the latter case, contiguous sub-ranges in which the intensity threshold is found to be exceeded can be combined to form the complete object-related frequency range.

The extraction of step c) might be done - precisely to size of the object-related frequency range - after its limits have been determined in step b). However, a considerable amount of computing effort may be avoided if the process is done the other way round: if the sub-ranges are predetermined, the extraction of step c) may be done for all sub-ranges in a first step, namely by a resolution-limited transformation of the received wave into the frequency domain, then determining the intensity in each frequency sub-range thus obtained, and assigning a sub-range to an object-related frequency range or to a noise range depending on its intensity.

Monitoring the phase of the spectral component in step d) requires repeated phase measurements. In order to be comparable, these must determine the phase with respect to some common reference. This can be done by synchronizing each measurement with a predetermined phase of the frequency modulation of the emitted wave.

Judging the variation of these phases is complicated by the fact that the phases can only assume values in a $2\pi$ wide interval, and if this interval is e.g. $[0, 2\pi[$ the standard deviation of phases which vary around 0 (and which, instead of becoming negative, take values short of $2\pi$) will be much larger than if the interval was e.g. $]-\pi, \pi]$. This problem can be avoided if the phase of a spectral component is monitored in step d) not by merely determining the phase of the spectral component with respect to the common reference but by calculating fluctuations between phases obtained in successive measurements.

Since the frequency sub-ranges and the distance ranges corresponding to them can be predetermined without regard to the objects that exist in the monitored area, an object may span several sub-ranges, and if the object moves, phase fluctuations can be induced in any of these. Therefore, in step e) a function of phase fluctuations of the sub-ranges of the object-related band may be evaluated and the decision of step e) may be taken by comparing the evaluation result to a threshold.

A sub-range having a high signal intensity can be expected to contain more of a given object than an adjacent sub-range having a low signal intensity. Therefore, in said function the phase fluctuation of a sub-range having a high signal intensity can be weighted higher than that of a sub-range having a low signal intensity.

On the other hand, movement of an object is observed best at its surface, not in its bulk. Therefore, it may be appropriate to weight the phase fluctuation of a sub-range at an edge of the object-related range higher than that of a sub-range sandwiched between other sub-ranges of the object-related frequency range.

A particularly simple way to evaluate the phase fluctuations is by deciding whether the phase in said sub-range is variable or not, and by using the binary data thus obtained as input for a logical function. Such a function can be designed to decide that the object is animate if variable phases are found to exist in a required fraction of the sub-ranges of the object-related range, in a predetermined minimum number of sub-ranges, or in critically located sub-ranges, in particular those at the edges of the object-related range.

As an auxiliary criterion for the decision of step e) the intensity of the spectral component may be monitored. E.g. the threshold of step e) may be predetermined as a function of the intensity, becoming the lower, the higher the intensity is, or phase data associated to insufficient intensity may be discarded.

When applied in a robotic system, the method may further comprise the steps of

f) estimating a distance between the object and a transceiver which emits the frequency-modulated wave and receives the reflected wave,
g) estimating a relative speed of said object and said transmitter, and
h) decelerating the transmitter if a time to collision calculated based on said distance and relative speed is below a threshold.

The distance between the object and the transceiver can be the distance range associated to the object-related frequency range of a reflecting object.

The transceiver can be located on a robot, the speed of which is known to its controller. The controller can therefore easily estimate the relative speed by adding a safety margin, accounting for possible movement of the object, to the speed of the robot. Based on this relative speed and the distance, a minimum time to collision is straightforwardly calculated, and the transceiver is decelerated along with the robot if the time to collision is below a threshold.

Further objects of the invention are a robot system comprising a robot, a transceiver for emitting a frequency-modulated wave into and receiving a reflected wave from a vicinity of the robot, and a processor unit for controlling the robot based on data from the transceiver using the method as described above, and a computer program product comprising program code means which enable a computer to perform the method.

Further features and advantages of the invention will become apparent from the subsequent description of embodiments, referring to the appended drawings.

Fig. 1     is a schematic plan view of a robot and its vicinity;

Fig. 2     is a diagram illustrating the spectrum of a difference frequency signal derived from a reflected wave, in the course of time;

Fig. 3     is a diagram illustrating the development of the intensity spectrum of the difference frequency signal over time;

Fig. 4     is a diagram analogous to Fig. 3, illustrating changes in the phase spectrum over time;

Fig. 5     is a block diagram of the transceiver and the processor unit of a controller for the robot pf Fig. 1;

Fig. 6     is a flowchart of an operating method of the processor unit of Fig. 5; and

Fig. 7     is an enlarged detail of the diagram of Fig. 4.

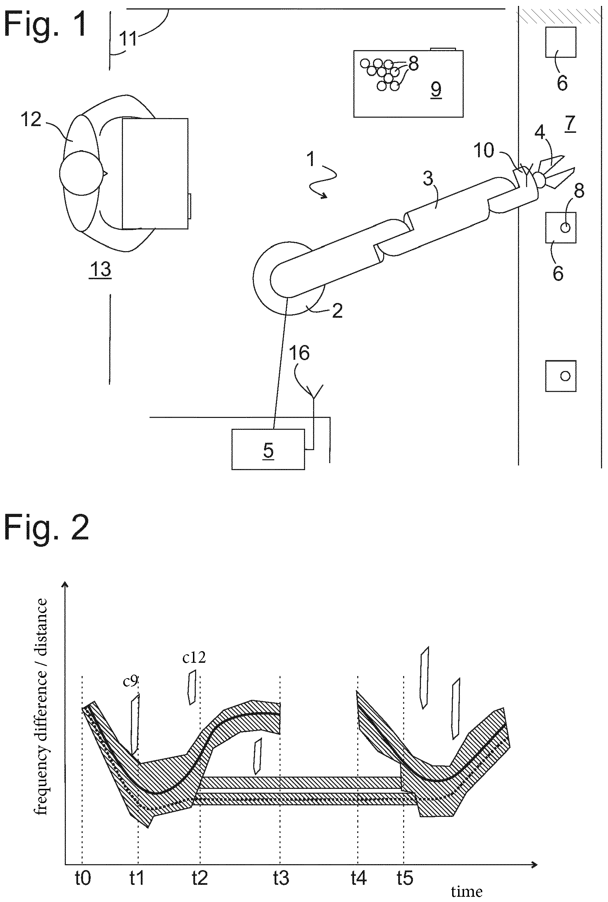

Fig. 1 is a schematic plan view of an industrial robot 1 and its working environment. In the embodiment shown here, the robot 1 has a stationary base 2, one articulated arm 3 and an end effector 4 at the free end of the arm, but it should be kept in mind that the method which will be described subsequently is also applicable to more complex systems in which the robot is mobile and/or in which it comprises more than one arm and one end effector.

The motion of the robot 1 is controlled by a processor unit 5, typically a microcomputer, in order to carry out a predefined manufacturing task, for example combining each of a series of first workpieces 6, supplied by a conveyor 7, with a second workpiece 8, taken from a crate 9.

The processor unit 5 is connected to a transceiver 10 mounted adjacent to the end effector 4 near the free end of arm 3. The transceiver 10 can be designed to transmit and receive any kind of tuneable wave, such as ultrasound, laser radiation etc. In the subsequent description, it will be assumed that the transceiver 10 is a radar transceiver that emits and receives microwave radiation.

Radiation emitted by the transceiver 10 is reflected by objects in its vicinity, e.g. by the conveyor 7 and the workpieces 6 on it, by the crate 9, or by walls or barriers 11 which confine the space in which the robot 1 is working.

The transceiver 10 emits a continuous wave, the frequency of which varies with time according to a sawtooth function, i.e. it sweeps linearly from e.g. a minimum to a maximum frequency and, reverts to the minimum frequency instantaneously as soon as the maximum has been reached. The duration of one sweep is 1 ms. It is far longer than the maximum travel time of the microwave propagating from the transceiver 10 to a reflecting object and back; if the maximum distance between the transceiver 10 and the walls 11 is e.g. 3 m, the travel time would be 20 ns. Therefore, at almost any time, the frequency difference between the emitted wave and a reflected wave received at transceiver 10 is directly proportional to the distance between the transceiver 10 and the object that reflected the wave.

By modulating the received reflected wave with the emitted one, a difference frequency signal is obtained in which contributions from every reflecting object have a frequency proportional to their distance from the transceiver.

Among the objects that contribute to the reflected wave and to the difference frequency signal derived therefrom, there can be a person 12 who moves in the vicinity of the robot, e.g. who comes in by a passage 13 in wall 11, brings a new crate 9 and takes away the old one.

Fig. 2 illustrates the effect of the moving person 12 on the difference frequency signal. The axes of the diagram are representative of time and difference frequency (and of the distance associated to the difference frequency). Hatched regions of the diagram correspond to frequencies having a significant amplitude, originating from a reflecting object. In order to keep the evaluation of the difference frequency signal simple, it is assumed that the transceiver 10 illuminates only a small sector of the vicinity of the robot 1, so that the difference frequency signal comprises contributions only from a small number of reflecting objects. At t=0, the main contribution is that of the person 12 carrying the crate, entering the detection sector of transceiver 10 at a rather large distance. From then to t=t1, the person 12 approaches transceiver 10, as shown by the downward slope of the hatched region. The vertical extent of the hatched region is representative of the fact that not all the reflecting surface of person 12 has the same distance from transceiver 10.

Curves c12, c9 represent the distance of some arbitrary reference points of the person 12 and the crate 9. They are shown here only to facilitate the understanding of the diagram; they do not appear in the difference frequency signal.

At t=t2, the person 12 puts down crate 9 and begins to move away. Until that time, the person 12 and the crate 9 were undistinguishable in the difference frequency signal. Only when the person 12 has moved away from the crate 9 far enough, the difference frequency signal begins to split into two bands, of which one can be associated to the person 12 and the other to the crate 9.

The band associated to the person 12 vanishes at t=t3, when the person 12 leaves the sector monitored by transceiver 10. It reappears at t=t4, when the person 12 comes back to fetch the crate 9. The band associated to the crate 9 extends horizontally, at constant frequency, from t3 to an instant t5 at which the person 12 has come close enough to the crate 9 to seize it.

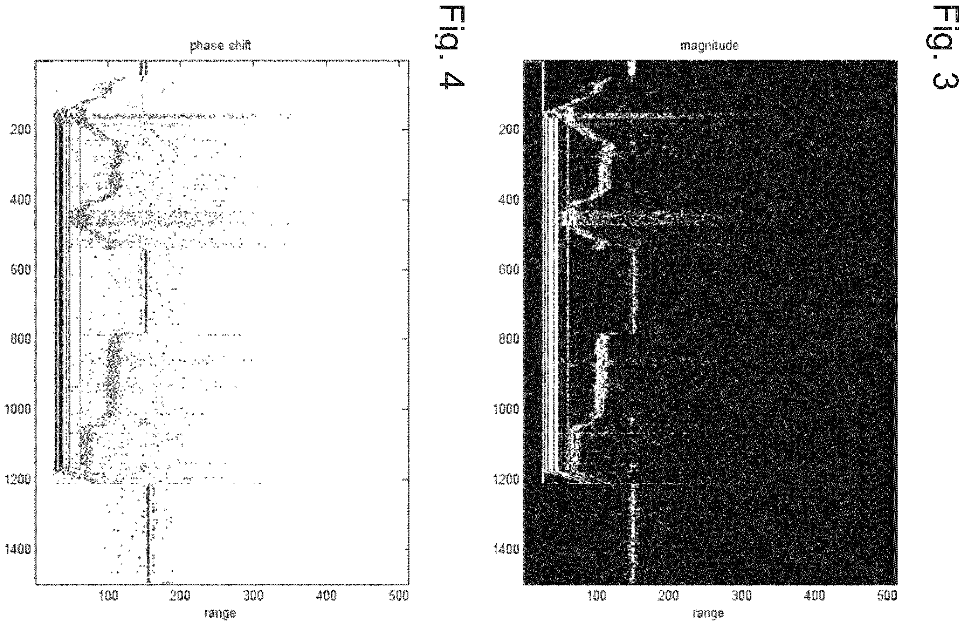

Fig. 3 illustrates a real series of measurements of the spectrum of the difference frequency signal. Time is shown in seconds at the abscissa. The frequency is shown in arbitrary units at the ordinate axis, the range corresponding to it is given in cm at the right hand side of the diagram. Frequencies where the intensity of the signal exceeds a given threshold are shown in white, others in black. There is an interrupted horizontal white line at a range of approx. 150 corresponding to a reflexion by a wall 11. The line is interrupted for the first time at t= approx. 50 s, when the person 12 moves between the transceiver 10 and the wall 11. A downwardly inclined white line between t=50s and t=180s corresponds to the person 12 approaching transceiver 10. A distinct white bar beginning at t=180s originates from the crate 9 put down by person 12. From t=180s to t=240s, the white line of person 12 rises again, since the person moves away from the crate 9. The person 12 stands more or less still until t=360s, then returns to the crate 9, manipulates it from t=400s to t=480s, then walks away, so that the horizontal line of the wall 11 becomes discernible again from t=540s to t=780s. Then the person 12 returns, stands still until t=1020s, approaches the crate 9 and removes it at t=1200s.

Between the wave emitted by transceiver 10 and the reflected wave received by it there is not only a difference in frequency but also in phase. Since there is the frequency difference, the phase difference varies in time, however, if measurements are taken at precisely the same instants of successive frequency sweeps, measurements of the phase difference are reproducible, i.e. if the phase difference varies from one measurement to the next, the variation is not random, but due to a variation of travel time.

Fig. 4 illustrates the result of phase measurements of the spectrally resolved difference frequency signal of Fig. 3. The axes of the diagram are the same as in Fig.2; i.e. each pixel of the diagram corresponds to a specific spectral component of the difference frequency signal, originating from a region of a reflecting object whose distance from the transceiver corresponds to the frequency of the spectral component, and the pixel is shown in white if the phase shift between said spectral component and the wave emitted by transceiver 10 is less than a predetermined threshold (or if the spectral component is too weak for its phase to be reliably detected), whereas it is black if the phase difference exceeds the threshold. This leads to many pixels of the diagram appearing in white because there is no reflecting object in the distance corresponding to them. The crate 9 shows as a bunch of parallel black and white lines, the white lines corresponding to a distance at which the wave is reflected by the crate 9 but its phase, when reaching the transceiver 10, differs little from that of the emitted wave, and the black lines corresponding to a distance where there is a substantial phase shift.

Since the crate 9 is completely immobile while it rests on the floor, the travel time from the transceiver 10 to a given point on the crate 9 and back does not vary, and repeated phase shift measurements yield identical results, so that the colour of pixels associated to the crate 9 does not change in Fig. 4. In contrast, the person 12 cannot stand perfectly still; a certain amount of movement due to respiration and heartbeat is inevitable, and when the wavelength emitted by transceiver 10 is in the same range, then the phase shift of a wave reflected from the person's body will vary from one measurement to the next. Just this can be seen in the diagram of Fig. 4, there pixels associated to reflexion by the person can appear black in one measurement and white in the next one even from t=780s to t=1020s, when person 12 is standing still.

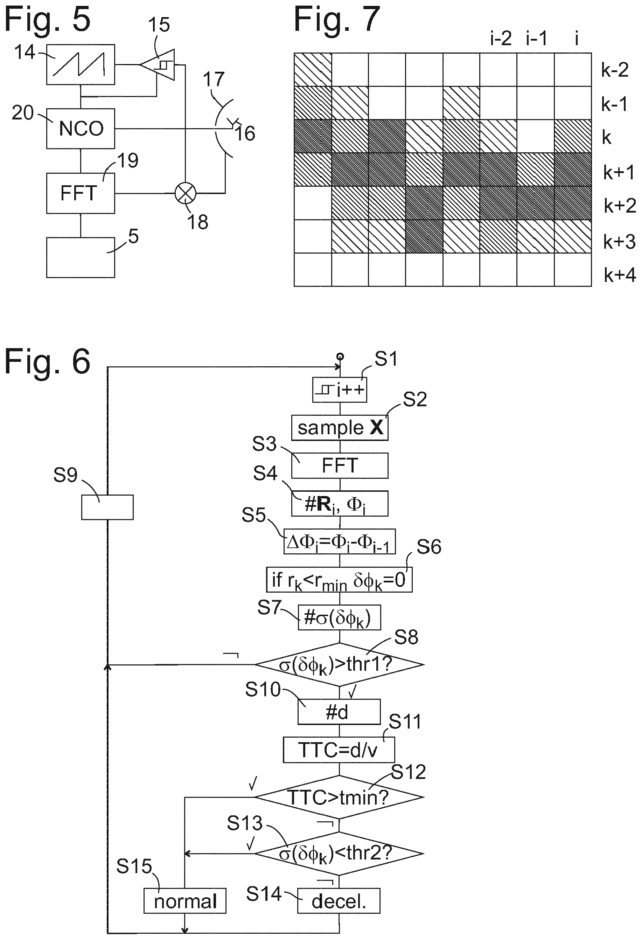

Fig. 5 is a block diagram of the transceiver 10 and of the processor unit 5. The transceiver 10 comprises a sawtooth oscillator 14 outputting a linear ramp at a repetition rate of e.g. 1 kHz. The ramp may be in the form of an analog voltage for controlling a VCO; preferably it is in digital form and controls the output frequency of a numerically controlled oscillator 20. This output frequency is in the range of 100 to several 100 GHz, corresponding to a radar wavelength from a few millimetres to the sub-mm-range.

A trigger circuit 15 is connected to the output of sawtooth oscillator 14, in order to be activated at the end of each ramp of the sawtooth signal. It is further connected to the output of oscillator 20, so that while active, it will trigger a new ramp of sawtooth oscillator 14 at a predetermined phase of the output of oscillator 20. In this way, the phase of oscillator 20 is locked to the ramp; i.e. at every beginning of a ramp, the phase of oscillator 20 output will be the same.

Oscillator 20 drives a transmitter antenna 16 of transceiver 10. Radar waves emitted by antenna 16 are reflected by objects in it vicinity and are received by a receiver antenna 17. A frequency difference between a signal received by receiver antenna 17 and the radar wave emitted at the same time by antenna 16 is proportional to the travel time of the wave, i.e. to the distance between the transceiver 10 and the reflecting object. The output of receiver antenna 17 is multiplied with that of oscillator 20 in demodulator 18 in order to obtain a difference frequency signal whose spectral components correspond to waves reflected at different distances from transceiver 10.

A FFT circuit 19 is provided for transforming a vector of samples taken from the difference frequency signal during one ramp of the sawtooth oscillator 14 into the frequency domain. Conventionally the result of the Fast Fourier Transform (FFT) is a complex-valued vector having as many components as the original sample vector. Each such transform corresponds to one column of the diagrams of Fig.3 and 4, each pixel of a column representing one vector component.

In practice, not all components of the transform vector have to be calculated; it may be sufficient to combine groups of components of the transform vectors into bins and to calculate only these, using e.g. the Goertzel algorithm.

As shown in Fig. 5, the processor unit 5 can be connected to an output of FFT circuit 19, in order to process the transform vectors output therefrom, as will be described below referring to Fig. 6. It will be readily apparent to the skilled person, however, that any one or more of the FFT circuit 19, the demodulator 18, the oscillators 14, 20 and the trigger circuit 15 might be implemented by software in the processor unit 5 as well.

The starting point of the method of Fig. 6 is the instant in which a ramp is triggered in step S1. While the ramp lasts, samples of the reflected wave are collected, so that a sample vector $\mathbf{X}=(x_0, ..., x_{n-1})$ is obtained in step S2. A Fourier transform vector $\mathbf{F}=(f_0, ..., f_{m-1})$ is calculated in step S3. The number of components m of the transform vector may be the same as the component number n of the sample vector, or it may be smaller, if several components are combined into frequency bins, as mentioned above. The components $f_k$, k=0, ..., m-1 of the transform vector $\mathbf{F}$ are complex-valued, i.e. they can be written as $f_k= r_k \exp(i\phi_k)$, so that from the transform vector $\mathbf{F}$ there can be derived two real-valued vectors, namely a magnitude vector $\mathbf{R}_i=(r_0, ..., r_{m-1})$ and a phase vector $\Phi_i=(\phi_0, ..., \phi_{m-1})$ (S4), i being a counting index which is incremented at every start of a ramp in step S1.

In step S5, a vector $\Delta\Phi_i$ of phase differences between the present phase vector $\Phi_i$ and the one $\Phi_{i-1}$ obtained for the preceding ramp is obtained.

It is advisable to perform some noise cancelling in $\Delta\Phi_i$ in step S6, e.g. by setting to zero each component $\delta\phi_k$ for which the corresponding component $r_k$ of magnitude vector $\mathbf{R}_i$ is below a predetermined threshold $r_{min}$.

Using the phase difference vector $\Delta\Phi_i$ obtained in the present iteration of the method and vectors $\Delta\Phi_{i-1}$, $\Delta\Phi_{i-2}$, ... obtained in previous iterations, a variance $V(\delta\phi_{i,k})$ or a standard deviation $\sigma(\delta\phi_{i,k})$ of the phase difference is calculated in step S7 at least for those components of $\Delta\Phi_i$ that were not zeroed in step S6. This can be done by keeping in store a predetermined number of recent phase difference vectors and averaging their components and their deviations from average. Else, a floating average of the phase difference vector component $\delta\phi_k$ may be calculated:

$$\overline{\delta\phi}_{i,k} = \varepsilon\,\delta\phi_{i,k} + (1-\varepsilon)\,\overline{\delta\phi}_{i-1,k}$$

and a floating variance or a standard deviation is estimated by

$$V(\delta\phi)_{i,k} = \varepsilon(\delta\phi_{i,k} - \overline{\delta\phi}_{i,k})^2 + (1-\varepsilon)V(\delta\phi)_{i-1,k}$$

$$\sigma(\delta\phi)_{i,k} = \sqrt{V(\delta\phi)_{i,k}}\ .$$

Step S8 checks whether for any k=0, ..., m-1 of the transform vector $\mathbf{F}$ the variance $V(\delta\phi_{i,k})$ or the standard deviation $\sigma(\delta\phi_{i,k})$ exceeds a predetermined threshold. (It doesn't matter which of the two quantities is monitored, therefore in the following, only the standard deviation will be mentioned, it being understood that the variance might as well be used). If there is no component whose standard deviation $\sigma(\delta\phi_{i,k})$ exceeds the threshold, it can be taken for certain that there is no animate object in the detection range of transceiver 10. In that case the method is paused (S9) for some time, in which the processing unit 5 controls movements of the robot 1 by which it processes workpieces 6, 8 according to some predefined production program, and finally returns to S1, starting the n+1st iteration.

The number m of components of the transform vector $\mathbf{F}$ may be chosen so small that if for just one component k among its components 0 to m-1, the threshold is exceeded in S8, it can be taken for certain that there is a moving object within the detection range of transceiver 10. In that case the method branches to step S10, in which, based on the frequency difference associated to component k, the distance d between transceiver 10 and the reflecting object that gave rise to said component k is calculated. Based on said distance d and the instantaneous speed v of transceiver 10, a time to collision TTC is calculated (S11):

$$TTC = v/d.$$

If in S12 TTC is found to be long enough to bring the robot arm 1 to a complete halt before the transceiver 10 (or any other object attached to robot arm 1) can hit the object, no protective measures are necessary yet, and the method branches to S9.

Else control unit 5 begins to decelerate robot arm 1 (S14) so that it will be halted before it can touch the object. While the robot arm 1 is being decelerated, the process of Fig. 6 can be reiterated several times. In these subsequent iterations the control unit 5 may stop deceleration and return to normal operation according to the predefined production program (S15) if the conditions for decelerating the robot arm 1 are no longer fulfilled in S12 or if the standard deviation $\sigma(\delta\phi_{i,k})$ has fallen below a threshold thr2 which is significantly lower than the threshold thr1 of step S8 (S13), or if it has fallen below thr1 and stayed there long enough for the object to be qualified as inanimate.

Fig. 7 illustrates the judgment of step S8 by an example. Columns of squares in the diagram of Fig. 7 correspond to portions of the phase vector $\Phi$ obtained in consecutive iterations of the method of Fig. 6, the right column, labelled i, being more recent than those to the left. Each square in a column represents a component of phase vector Φ, and the density of hatching of a square is representative of the numerical value of the vector component $\phi_{i,k}$ the square stands for. Although the average phase is highest for components k+1, k+2, standard deviation is higher for components k and k+3; in the rows associated to these columns, there are three different types of hatching, whereas the rows k+1, k+2 have only two.

Instead of simply checking whether a threshold thr1 is exceeded for at least one vector component in step S8, various more sophisticated schemes are conceivable, for which different thresholds thr1 may apply. For example, it might be required that a threshold thr1 (which may then be lower than in step S8 as described above) is exceeded in two or more consecutive vector components. Considering the fact that the distance range corresponding to one vector component may be in the order of a few cm, and that the person 12 simply doesn't fit into one such distance range, it can be safely expected that the presence of the person 12 in the detection range of transceiver 10 will cause the threshold thr1 to be exceeded in two or more consecutive ranges. In the case of Fig. 7, the result might be that the threshold thr1 is found to be exceeded in components k to k+3, and that therefore a moving and, possibly, animate object exists in the distance range corresponding to these components.

Magnitude vectors $\mathbf{R}_i$, $\mathbf{R}_{i-1}$, ... may be evaluated to corroborate the result. If there is a noticeable change in magnitude between component $r_i$ and a neighbouring component, e.g. $r_{i-1}$, or between $r_{i+1}$ and $r_{i+4}$, this increases the likeliness that the phase fluctuations in $\phi_{i,k}$ and $\phi_{i,k+3}$ are due to a moving object.

Further, since in order to reflect the radar wave to the transceiver, a reflecting surface should be perpendicular to the propagation direction of the radar wave, and a movement of the person 12 must have a component perpendicular to said propagation direction in order to affect the phase of the reflected wave, it is plausible that the surfaces of a person whose movement is best to detect by transceiver 10 are those which are closest and farthest from the transceiver 10. Therefore, if the phase vector $\Phi_i$ has two components at positions k, k' which have a high standard deviation $\sigma(\delta\phi_{i,k})$, $\sigma(\delta\phi_{i,k'})$, components at positions between k and k' which have nonzero standard deviation and components at positions outside the range from k to k' whose standard deviation is less than $\sigma(\delta\phi_{i,k})$ and $\sigma(\delta\phi_{i,k'})$, then the presence of a person can be detected with both high sensitivity and low false alarm rate even if the threshold above which the standard deviation is rated as high is considerably lower than the threshold thr1 mentioned above.

In this way an object that might be animate can be detected in a very short observation time amounting to a couple of periods of sawtooth oscillator 13, i.e. in milliseconds, and appropriate protection measures can be taken in step S14.

There is the possibility that the phase fluctuation evaluated in steps S7, S8 is due to a moving object which is not animate, but driven by some kind of motor. Such an object can be expected to move at a more constant speed than a person, where the speed of the limbs, when walking, oscillates about an average speed at the frequency of his steps, breathing modulates the speed of the breast, etc. Therefore, $\delta\phi_{i,k}$ can be expected to vary slowly and continuously from one iteration i to in the case of an inanimate moving object, whereas if the object is animate, variations of $\delta\phi_{i,k}$ should be more irregular. Therefore, if $\delta\phi_{i+1,k}$ is too predictable, e.g. if the fraction of iterations in which $\delta\phi_{i+1,k}$ differs by not more than a threshold ι from what would be expected extrapolating previous data, i.e. if

$$\delta\phi_{i+1,k}-\iota < 2\delta\phi_{i,k}-\delta\phi_{i-1,k}<\delta\phi_{i+1,k}+\iota$$

exceeds some predetermined limit, then the object is assumed to be inanimate, and normal operation of the robot arm 1 is resumed (S15).

## Reference Numerals

| 1  | robot            |
|----|------------------|
| 2  | base             |
| 3  | arm              |
| 4  | end effector     |
| 5  | processor unit   |
| 6  | first workpiece  |
| 7  | conveyor         |
| 8  | second workpiece |
| 9  | crate            |
| 10 | transceiver      |
| 11 | wall, barrier    |
| 12 | person           |
| 13 | passage          |
| 14 | oscillator       |
| 15 | trigger circuit  |
| 16 | antenna          |
| 17 | receiver antenna |
| 18 | demodulator      |
| 19 | FFT circuit      |
| 20 | NCO              |

## Claims

1. A method for distinguishing between animate and inanimate objects in a monitored area, comprising the steps of:

   a) emitting (S1) a frequency-modulated wave in-

to said area and receiving (S2) a reflected wave from said area;

b) identifying (S8), within the spectrum of the reflected wave, at least one object-related frequency range (k,..., k+3) associated to a reflecting object;

c) extracting (S3) from said reflected wave a spectral component (k,...) corresponding to at least a sub-range of said object-related frequency range ([k, ..., k+3]),

d) monitoring (S5, S7) the phase ($\phi_k$) of said spectral component (k); and

e) deciding (S8) that the object is animate if fluctuations ($\sigma(\delta\phi_k)$) of said phase ($\phi_k$) exceed a predetermined threshold.

2. The method of claim 1, wherein the frequency of the frequency-modulated wave follows a linear ramp.

3. The method of claim 2, wherein the period of the ramp is at least 20 $\mu$s.

4. The method of any of claims 1 to 3, further comprising the step of comparing (S6) the spectral intensity ($r_k$) of the reflected wave to an intensity threshold ($r_{min}$), wherein in step b) a frequency range in which the spectral intensity of the reflected wave is above the intensity threshold is identified as an object-related frequency range ([k,..., k+3]).

5. The method of any of claims 1 to 4, wherein the frequency range of the emitted wave is divided into a plurality of sub-ranges, the intensity of a spectral component ($r_k$) of the reflected wave corresponding to one of said sub-ranges (k) is compared to an intensity threshold ($r_{min}$), and the sub-range is regarded (k) as part of an object-related frequency range ([k,..., k+3]) if the intensity threshold is exceeded.

6. The method of claim 5, wherein contiguous sub-ranges in which the intensity threshold is exceeded are combined to form the object-related frequency range ([k,..., k+3]).

7. The method of claim 6, wherein the spectral component extracted in step c) is the spectral component corresponding to each of said contiguous sub-ranges.

8. The method of claim 7, wherein in step e) a function ($\sigma$) of phase fluctuations of the sub-ranges of the object-related band ([k,..., k+3]) is evaluated and the decision of step e) is taken by comparing (S8) the evaluation result ($\sigma(\delta\phi_k)$) to a threshold (thr1).

9. The method of claim 8, wherein in said function the phase fluctuation of a sub-range having a high signal intensity is weighted higher than that of a sub-range having a low signal intensity.

10. The method of claim 8 or 9, wherein the phase fluctuation of a sub-range (k, k+3) at an edge of the object-related range ([k,..., k+3]) is weighted higher than that of a sub-range sandwiched between other sub-ranges of the object-related frequency range ([k,..., k+3]).

11. The method of any of the preceding claims, wherein step d) further comprises monitoring the intensity of said spectral component, and the decision of step e) is further based on said intensity (S6).

12. The method of any of the preceding claims, further comprising the steps of

f) estimating (S10) a distance between the object and a transceiver (10) which emits the frequency-modulated wave and receives the reflected wave,

g) estimating a relative speed (v) of said object and said transceiver (10), and

h) decelerating (S14) the transmitter (10) if a time to collision calculated (S11) based on said distance and relative speed is below a threshold.

13. A robot system comprising a robot (1), a transceiver (10) for emitting a frequency-modulated wave and receiving a reflected wave from a vicinity of the robot (1) and a processor unit (5) for controlling the robot (1) based on data from the transceiver (10) using the method of one of the preceding claims.

14. A computer program product comprising program code means which enable a computer to perform the method according to any of claims 1 to 13.

# Fig. 1

# Fig. 2

EP 3 457 166 A1

# Fig. 3

# Fig. 4

10

# Fig. 5

# Fig. 7

# Fig. 6

Europäisches
Patentamt

European
Patent Office

Office européen
des brevets

# EUROPEAN SEARCH REPORT

**Application Number**

EP 17 19 0739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 555 121 A (EMSLIE ALFRED G) 29 May 1951 (1951-05-29) * col. 1, lines 1-44 and claim 4; figure 3 * | 1 | INV. G01S7/41 G01S13/34 G01S13/88 |
| X | US 2 982 955 A (ENENSTEIN NORMAN H) 2 May 1961 (1961-05-02) * figure 3 * | 1 | |
| X | US 2016/022204 A1 (MOSTOV KIRILL [US]) 28 January 2016 (2016-01-28) * paragraphs [0064] - [0070], [0110] - [0112]; figures 1,3,13 * | 1-14 | |
| X | US 2009/135044 A1 (SUTPHIN ELDON M [US]) 28 May 2009 (2009-05-28) * paragraphs [0005], [0030] - [0032]; figures 1-3 * | 1 | |

|  | TECHNICAL FIELDS SEARCHED (IPC) |
|---|---|
|  | G01S |

The present search report has been drawn up for all claims

| Place of search | Date of completion of the search | Examiner |
|---|---|---|
| Munich | 6 March 2018 | Metz, Carsten |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 17 19 0739

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2018

| Patent document cited in search report | | Publication date | Patent family member(s) | | Publication date |
|---|---|---|---|---|---|
| US 2555121 | A | 29-05-1951 | NONE | | |
| US 2982955 | A | 02-05-1961 | NONE | | |
| US 2016022204 | A1 | 28-01-2016 | US | 2016022204 A1 | 28-01-2016 |
| | | | WO | 2014159773 A1 | 02-10-2014 |
| US 2009135044 | A1 | 28-05-2009 | EP | 1706758 A2 | 04-10-2006 |
| | | | US | 2009135044 A1 | 28-05-2009 |
| | | | WO | 2005074422 A2 | 18-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014172668 A1